(19) Europäisches Patentamt
European Patent Office
Office européen des brevets

(11) **EP 2 808 720 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **14170442.9**

(22) Anmeldetag: **28.05.2014**

(51) Internationale Patentklassifikation (IPC):
**G02B 26/08** (2006.01)   **B81B 3/00** (2006.01)

(52) Gemeinsame Patentklassifikation (CPC):
**G02B 26/0858**

(54) **Vorrichtung mit einer Feder und einem daran aufgehängten optischen Element**

Device with a spring and a suspended optical element

Dispositif doté d'un ressort et d'un élément optique suspendu à celui-ci

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2013 DE 102013210059**

(43) Veröffentlichungstag der Anmeldung:
**03.12.2014 Patentblatt 2014/49**

(73) Patentinhaber: **Fraunhofer-Gesellschaft zur Förderung der angewandten Forschung e.V. 80686 München (DE)**

(72) Erfinder:
• **Gu-Stoppel, Shanshan 25524 Itzehoe (DE)**
• **Kaden, Dirk 25335 Elmshorn (DE)**

• **Eisermann, Christian 25336 Elmshorn (DE)**

(74) Vertreter: **Schenk, Markus et al Schoppe, Zimmermann, Stöckeler Zinkler, Schenk & Partner mbB Patentanwälte Radlkoferstrasse 2 81373 München (DE)**

(56) Entgegenhaltungen:
**US-A1- 2004 160 118     US-A1- 2008 165 402
US-A1- 2010 097 681     US-A1- 2010 277 783
US-B1- 6 830 944**

• **IZHAR U ET AL: "Multi-axis micromirror for optical coherence tomography", PROCEDIA CHEMISTRY, ELSEVIER, AMSTERDAM, NL, vol. 1, no. 1, 1 September 2009 (2009-09-01), pages 1147 - 1150, XP026799753, ISSN: 1876-6196, [retrieved on 20090901]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Vorrichtung mit einem optischen Element, welches über Federn an Aktuatoren verkippbar gelagert ist.

Bimorph-Aktuatoren bestehen typischerweise aus einer aktiven und einer passiven Schicht, wobei die Aktuatoren unterschiedliche, beispielsweise thermische oder piezoelektrische, Ausdehnung- oder Kontraktionseigenschaften der Schichtmaterialien nutzen, um Auslenkungen der Aktuatoren zu bewirken.

Systeme mit Bimorph-Aktuatoren und einem um eine Achse quasi-statisch und mit großen Auslenkungen verkippbaren optischen Element, bspw. ein Mikrospiegel, benötigen in den meisten Fällen sehr große Bauteilflächen des Systems, da die Auslenkung solcher Bimorph-Aktuatoren und mithin die Auslenkung des optischen Elementes unter anderem von der Länge der Aktuatoren abhängig ist. Ein um zwei senkrecht zueinander stehende Torsionsachsen ausgelenktes optisches Element weist einen noch höheren Flächenbedarf auf, da zusätzliche Aktuatoren angeordnet werden. Ein höherer Flächenbedarf ist für MEMS-Bauteile ein erheblicher Nachteil.

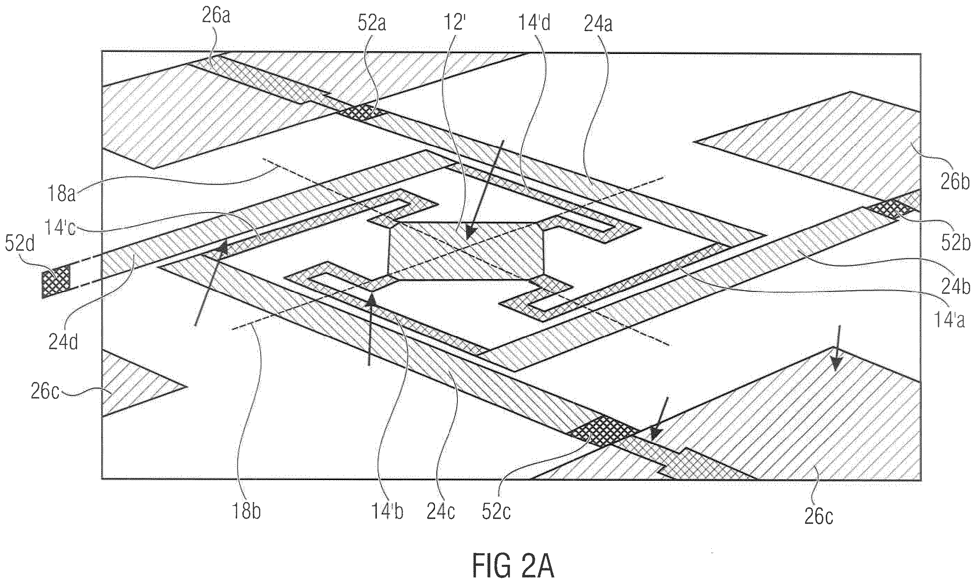

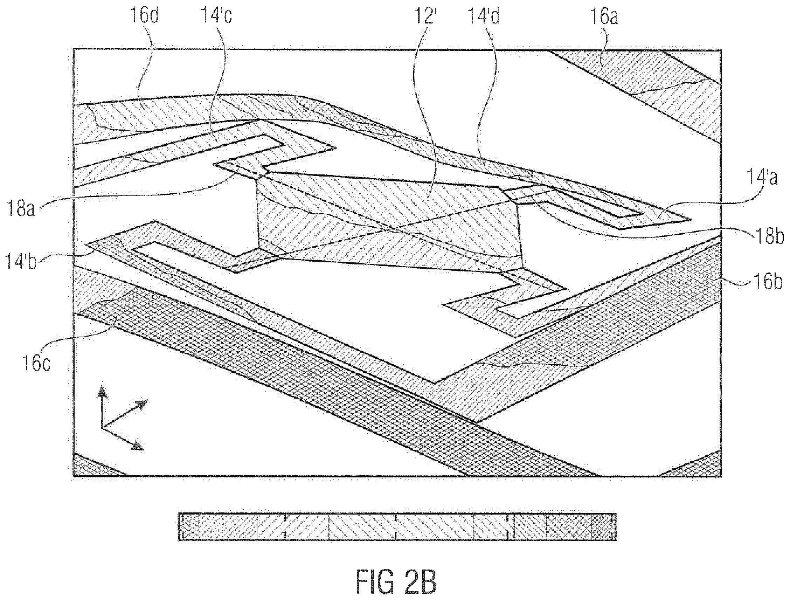

Eine Ausführungsform eines Mikrospiegels mit zwei senkrecht zueinander stehenden Torsionsachsen, welcher in beiden Torsionsachsen bzw. den resultierenden Drehbewegungen quasi-statisch betrieben wird, ist in den Fig. 2a und 2b für thermisch auslenkbare Aktuatoren dargestellt und ist beispielsweise auch für piezoelektrisch auslenkbare Aktuatoren nutzbar.

Fig 2a zeigt eine Vorrichtung mit einem optischen Element 12', welches über vier mehrfach geknickte Federn 14'a-d an vier senkrecht zu einander angeordneten Aktuatoren 16a-d um die Torsionsachsen 18a und 18b verkippbar aufgehängt ist. An den Aktuatoren 16a-d sind Heizelemente 52a-d angeordnet, welche ausgebildet sind, um die Aktuatoren 16a-d lokal zu erwärmen, wobei lokal variierende thermische Ausdehnungskoeffizienten von Aktuatorschichten, bei einer Erwärmung der Aktuatoren 16a-d zu einer Auslenkung der Aktuatoren 16a-d und mithin zu einer Auslenkung des optischen Elementes 12' führen.

Die Auslegung erlaubt relativ große Kippwinkel des optischen Elementes 12', jedoch sind die Aktuatoren 16a-d in Relation zu Kantenlängen des optischen Elementes 12' lang ausgebildet, was den Flächenbedarf der Aktuatoren und mithin der Vorrichtung steigert. Zusätzlich weisen die Federn 14'a-d eine große axiale Ausdehnung auf. Insgesamt ist die Flächeneffizienz der Vorrichtung niedrig. Da eine Vergrößerung einer optischen Wirkfläche des optischen Elementes 12' mit ebenso vergrößerten Aktuatoren 16a-d und Federn 14'a-d einhergeht, ist dieses Design für optische Elemente mit großen Flächen ungeeignet.

Fig. 2b zeigt die Vorrichtung aus Fig. 2a in einem ausgelenkten Zustand. Die Aktuatoren 16a-d sind derart ausgelenkt, dass das optische Element 12' um die Torsionsachse 18a verkippt ist.

Der Aufbau dieser Vorrichtung ist in [1] für eine optische Kohärenztomographie beschrieben.

In US 2008/0165402 A1 ist ein Aktuator mit einer beweglichen Platte und einem Träger zum Tragen der beweglichen Platte beschrieben. Verbindungseinrichtungen sind ausgebildet, um die bewegliche Platte und den Träger zu verbinden und ermöglichen eine Rotation der beweglichen Platte relativ zum Träger.

Wünschenswert wäre demnach eine Vorrichtung, die mit einer großen Flächeneffizienz eine Verkippung von großen optischen Elementen erlaubt und einen kompakten Aufbau ermöglicht.

Die Aufgabe der vorliegenden Erfindung besteht deshalb darin, eine Vorrichtung bereitzustellen, bei der ein Element über Federn in zwei Richtungen verkippbar gelagert ist und die einen effizienteren Betrieb erlaubt.

Diese Aufgabe wird durch den Gegenstand der unabhängigen Patentansprüche gelöst.

Der Kerngedanke der vorliegenden Erfindung besteht deshalb darin, erkannt zu haben, dass obige Aufgabe sowohl dadurch gelöst werden kann, dass ein optisches Element an genau zwei optikseiteigen Anbringungsbereichen über Federn an Aktuatoren um eine erste und eine zweite Achse verkippbar gelagert ist, als auch indem ein optisches Element über vier optikseitige Anbringungsbereiche über Federn an Aktuatoren um zwei Achsen verkippbar gelagert ist, wobei je eine Feder mit einem Winkel zwischen 90° und 180° an einem Aktuator angeordnet ist.

Gemäß einem Ausführungsbeispiel wird ein optisches Element über zwei zwischen dem optischen Element und je einem Aktuator angeordneten Federn verkippbar aufgehängt, wobei die Federn gerade ausgebildet sind und eine kurze axiale Ausdehnung umfassen. Dadurch weist die Vorrichtung eine große Flächeneffizienz auf.

Weitere vorteilhafte Ausführungsformen sind Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:

Fig. 1     eine Aufsicht auf eine Vorrichtung mit einem optischen Element, das an zwei optikseitigen Anbringungsbereichen an Aktuatoren verkippbar gelagert ist;

Fig. 2a     eine Aufsicht auf eine Vorrichtung mit einem verkippbar gelagerten optischen Element gemäß dem Stand der Technik;

Fig. 2b     einen ausgelenkten Zustand der Vorrichtung aus Fig. 2a;

Fig. 3     eine schematische Darstellung einer Vorrichtung analog Fig. 1, bei der das optische Element eine größere Entfernung zu einer Einspannung umfasst als aktuatorseitige Anbringungsbereiche;

Fig. 4 eine schematische Seitenschnittansicht einer Feder;

Fig. 5 eine schematische Aufsicht auf eine Vorrichtung, welche Aktuatoren umfasst, die jeweils zwei Aktuatorelemente umfassen;

Fig. 6 eine Aufsicht auf eine Vorrichtung gemäß der beanspruchten Erfindung, bei der Aktuatoren in einem Winkel zu einander angeordnet sind;

Fig. 7a eine schematische Seitenschnittansicht eines Aktuators mit einer Funktionsschicht und einem Messelement in einem unausgelenkten Zustand;

Fig. 7b eine schematische Seitenschnittansicht des Aktuators aus Fig. 7a in einem ausgelenkten Zustand;

Fig. 8 eine Aufsicht auf eine Vorrichtung bei der jeweils zwei Federn an einem optikseitigen Anbringungsort angeordnet sind;

Fig. 9 eine Aufsicht auf eine Vorrichtung mit einem optischen Element und vier Federn, die mit einem Winkel an Aktuatoren angeordnet sind;

Fig. 10 eine Aufsicht auf eine gekrümmte Feder;

Fig. 11 eine Aufsicht auf eine Feder mit einer variablen lateralen Ausdehnung;

Fig. 12 eine Aufsicht auf die Vorrichtung aus Fig. 1, die ferner eine Steuereinheit umfasst, die ausgebildet ist, um die Aktautoren auszulenken;

Fig. 13 eine Aufsicht auf die Vorrichtung aus Fig. 9, die ferner eine Steuereinheit umfasst, die ausgebildet ist, um die Aktautoren auszulenken.

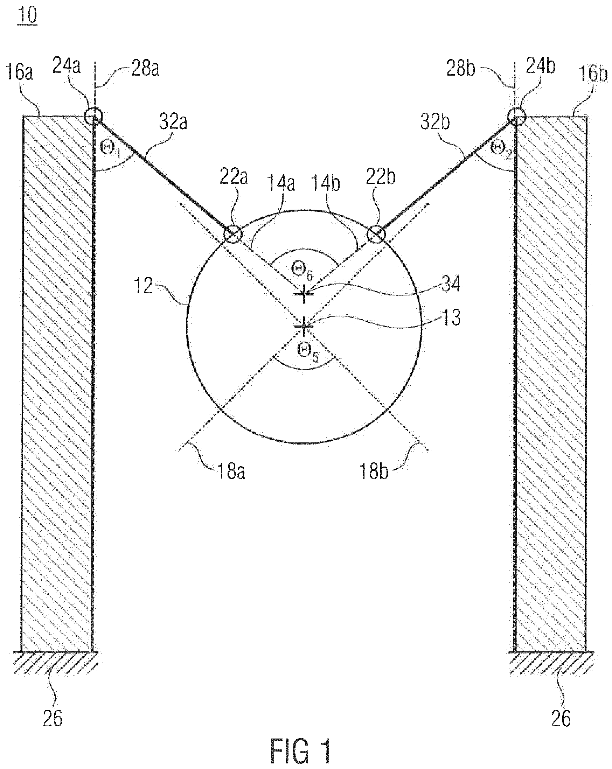

Fig. 1 zeigt eine Vorrichtung 10 mit einem runden optischen Element 12, dessen Hauptseite einen Flächenschwerpunkt 13 umfasst und über Federn 14a und 14b an Aktuatoren 16a und 16b um eine erste Torsionsachse 18a und eine zweite Torsionsachse 18b verkippbar gelagert ist und sich die Torsionsachsen 18a und 18b in einem Winkel $\theta_5$ benachbart zum Flächenschwerpunkt 13 schneiden. Die Federn 14a bzw. 14b sind an einem ersten, dem optischen Element 12 zugewandten Ende an einem optikseitigen Anbringungsbereich 22a bzw. 22b und an einem dem jeweiligen Aktuator 16a bzw. 16b zugewandten zweiten Ende an aktuatorseitigen Anbringungsbereichen 24a bzw. 24b mit dem optischen Element 12 bzw. den Aktuatoren 16a oder 16b verbunden. Die optikseitigen Anbringungsbereiche 22a und 22b umfassen dabei eine laterale Ausdehnung entlang eines Umfangs der Hauptseite des optischen Elementes 12, die jeweils kleiner ist als 10 % des Umfangs der Hauptseite.

Die Aktuatoren 16a und 16b sind an einer Einspannung 26 einseitig fest eingespannt und ausgebildet, um am bei einer Aktuierung am gegenüberliegend zur festen Einspannung 26 angeordneten Ende aus einer Ruhelage heraus ausgelenkt zu werden, wobei eine axiale Ausdehnung der Aktuatoren 16a und 16b größer in etwa dem 2,5-fachen des Durchmessers der Hauptseite des optischen Elementes 12 entspricht.

Die Anzahl der Aktuatoren 16a und 16b entspricht der Anzahl der optikseitigen Anbringungsbereiche 22a und 22b, so dass jeder optikseitige Anbringungsbereich 22a und 22b einem Aktuator 16a und 16b zugeordnet werden kann, mit welchem er über zumindest eine Feder 14a oder 14b verbunden ist.

Der Aktuator 16a umfasst einen Aktuatorverlauf 28a in einer Erstreckungsrichtung von der festen Einspannung 26 ausgehend hin zum aktuatorseitigen Anbringungsbereich 24a. Analog umfasst der Aktuator 16b einen Aktuatorverlauf 28b von der festen Einspannung 26 hin zum aktuatorseitigen Anbringungsbereich 24b. Ein Federverlauf 32a entlang einer axialen Ausdehnung vom ersten zum zweiten Ende der Feder 14a schneidet einen Federverlauf 32b entlang einer axialen Ausdehnung vom ersten zum zweiten Ende der Feder 14b in einem Schnittpunkt 34, der beabstandet vom Flächenschwerpunkt 13 ist mit einem Winkel $\theta_6$ von in etwa 100°. Ein Winkel $\theta_1$ beschreibt eine Ausrichtung der Feder 14a zum Aktuator 16a und mithin den Schnittwinkel der beiden Verläufe 28a und 32a, analog beschreibt ein Winkel $\theta_2$ eine Ausrichtung der Feder 14b zum Aktuator 16b und mithin den Schnittwinkel der beiden Verläufe 28b und 32b.

Der Winkel $\theta_5$, unter welchem sich die Torsionsachsen 18a und 18b schneiden, ist abhängig von einer Federlänge entlang einer axialen Ausdehnung vom ersten Ende hin zum zweiten Ende der Federn 14a bzw. 14b sowie den Winkeln $\theta_1$ und $\theta_2$.

Ein Abstand zwischen dem Schnittpunkt 34 der Federverläufe und dem Flächenschwerpunkt 13 führt dazu, dass effektiv reflektierende Kantenlängen des optischen Elementes 12, die jeweils eine größte Entfernung zweier Punkte des optischen Elementes 12 entlang einer Geraden senkrecht zu einer beliebigen Torsionsachse beschreiben, kürzer sind als geometrische Kantenlängen des optischen Elementes, die eine größte Entfernung zweier beliebiger Punkte innerhalb des optischen Elementes beschreibt, wobei diese Abweichung für eine Aktuatorsteuerung in einer Lookup-Tabelle hinterlegt und mithin korrigiert werden kann.

Mit einer in Fig. 1 gezeigten geometrische Anpassung ist eine zweidimensionale Verkippung des optischen Elementes 12 um zwei Torsionsachsen 18a und 18b unter Verwendung lediglich zweier Aktuatoren 16a und 16b.

Eine Auslenkung eines Aktuators 16a bzw. 16b führt zu einer Verkippung des optischen Elementes 12 um die Torsionsachse 18a bzw. 18b. Eine Verkippung des optischen Elementes 12 um die jeweils andere Torsionsachse 18a bzw. 18b kann durch eine geometrische Anpassung der Vorrichtung minimiert werden, wobei der Winkel $\theta_6$ stets kleiner ist als 180°.

Obwohl in Fig. 1 der Schnittpunk 34 innerhalb der Hauptseite des optischen Elementes 12 angeordnet ist, umfassen Ausführungsbeispiele Vorrichtungen, bei denen der Schnittpunkt 34 außerhalb des optischen Elementes 12 angeordnet ist.

Das Ausführungsbeispiel bietet eine hohe Flächeneffizienz für Systeme mit optischen Elementen, die zweidimensionale Torsionsbewegungen und große optische Wirkflächen, bspw. Spiegelflächen erfordern. Die zweidimensionale Bewegung wird durch eine angepasste Aufhängung des optischen Elementes über Federn ermöglicht, so dass die zweidimensionale Bewegung mit lediglich zwei Aktuatoren erzielt werden kann.

Zudem ist das Ausführungsbeispiel auch mechanisch sehr effizient. Da die Auslenkung der Aktuatoren stark von deren Länge abhängig ist, ist eine effiziente Übertragung der Aktuatorauslenkung auf das optische Element vorteilhaft und entscheidend ein das Verhältnis zwischen Verkippungswinkel des optischen Elementes zu benötigten Bauteilflächen des Systems.

Die Verbindungsfedern in einer Vorrichtung mit vier Aktuatoren gemäß dem Stand der Technik müssen häufig lang und teilweise mehrfach gekrümmt ausgeführt sein, da die Bewegung eines mit vier Bezugspunkten verbundenen optischen Elements immer von einen oder von zwei dieser Bezugspunkte beschränkt ist, während das optische Element über die anderen Bezugspunkte ausgelenkt wird. Daher müssen die Feder den auslenkenden Bezugspunkten lange und damit weich sein, um die Bewegung des optischen Elementes zuzulassen. Eine wechselseitige Verkippung des optischen Elementes erfordert somit auch eine entsprechend lange bzw. weiche Ausgestaltung aller Federn. Nachteilig hierbei ist, dass die Auslenkung der Aktuatoren von sehr langen oder geknickten Federn nur in einem reduzierten Umfang übertragen werden kann.

In dem Ausführungsbeispiel der Fig. 1 wird das optische Element dahingegen nur über zwei optikseitige Anbringungsbereiche mit Aktuatoren verbunden, womit die Bewegung des optischen Elementes nicht eingeschränkt wird. Daher können die Federn zwischen Aktuatoren und optischen Element kurz sein, um die Auslenkung der Aktuatoren effizient zu übertagen und die Abmessung sowohl der Aktuatoren als auch der Federn zu optimieren, womit eine Flächeneffizienz gegenüber einem unverändert großen optischen Element steigt.

Alternative Ausführungsbeispiele umfassen Aktuatoren, die eine axiale Ausdehnung aufweisen, die größer ist, als der Durchmesser des optischen Elementes und kleiner als das Fünffache des Durchmessers.

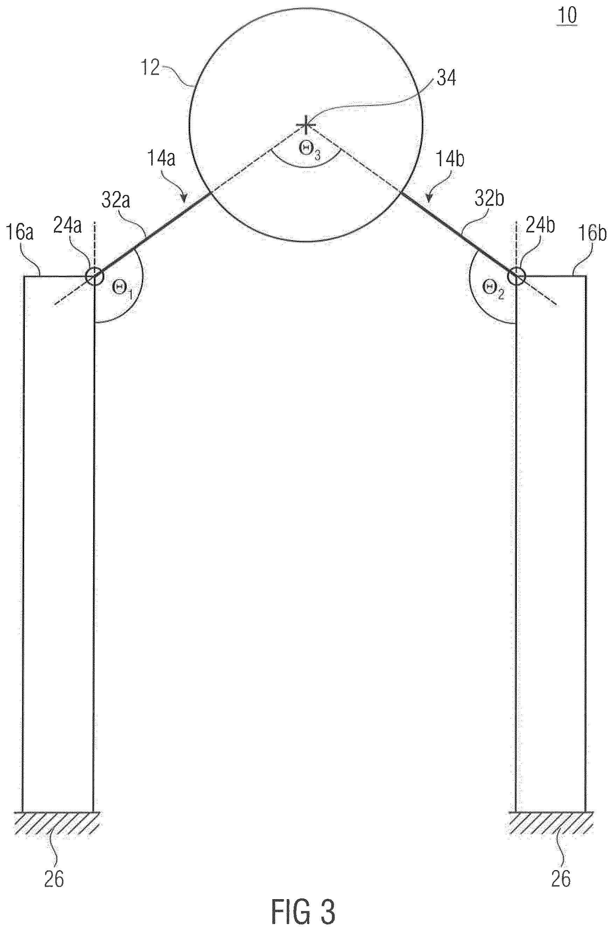

Fig. 3 zeigt Vorrichtung 10 analog Fig. 1, bei der das optische Element 12 mit einem größeren Abstand zur festen Einspannung 26 angeordnet ist, als die aktuatorseitigen Anbringungsbereiche 24a und 24b. Die Winkel $\theta_1$ und $\theta_2$ umfassen die einen Winkel, der größer ist als 90°, wobei der Winkel $\theta_3$ analog Fig. 1 kleiner ist als 180°.

Eine derartige Anordnung des optischen Elementes 12 kann vorteilhaft sein, wenn beispielsweise eine umzulenkende optische Strahlung durch eine Anordnung nach Fig. 1 behindert würde, indem Aktuatoren 16a und 16b optische Transmissionspfade blockieren.

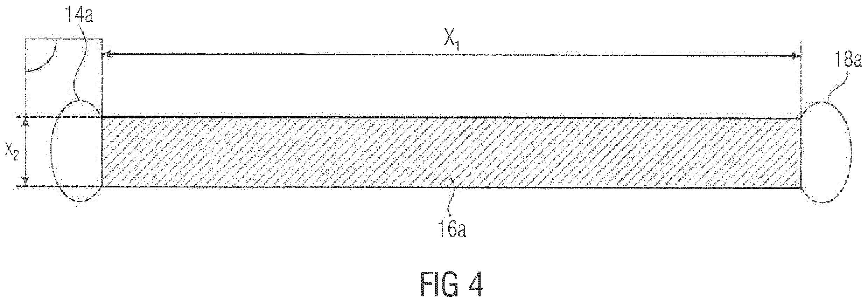

Fig. 4 zeigt eine Aufsicht auf die Feder 14a der Vorrichtung 10 aus Fig. 1. Die Feder 14a umfasst eine axiale Ausdehnung $x_1$ vom ersten Ende zum zweiten Ende der Feder 14a und eine laterale Ausdehnung $x_2$, die zur axialen Ausdehnung $x_1$ senkrecht angeordnet ist. Die laterale Ausdehnung $x_2$ ist kleiner als die axiale Ausdehnung $x_1$ multipliziert mit einem Faktor 0,3, so dass die Feder gegenüber einer lateralen Breite eine große axiale Länge aufweist. Die Ausdehnung $x_1$ ist kleiner als das Doppelte der größten Entfernung zweier beliebiger Punkte einer Hauptseite des optischen Elementes an welcher die Feder 14a angeordnet ist.

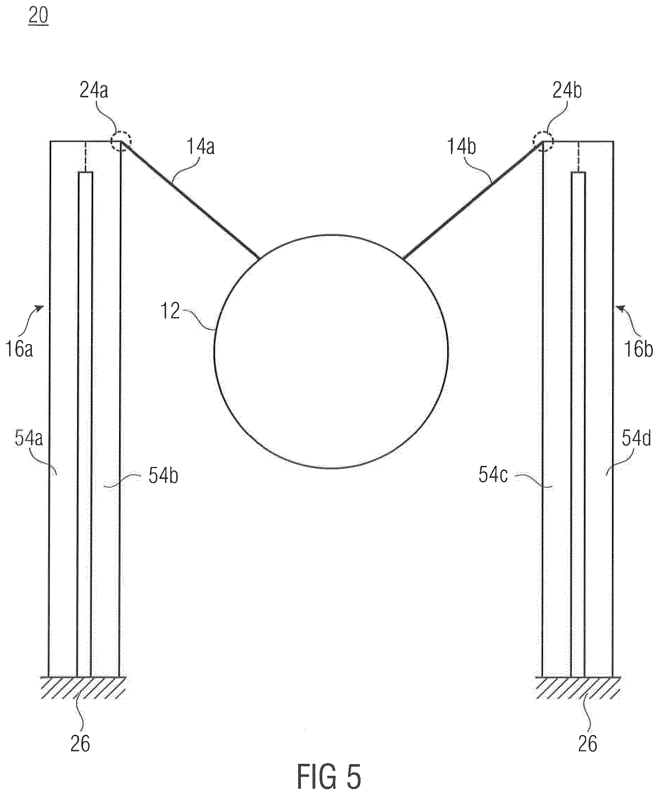

Fig. 5 zeigt eine Vorrichtung 20, bei der die Aktuatoren 16a und 16b jeweils zwei von einander beabstandete Aktuatorelemente 54a und 54b bzw. 54c und 54d umfassen, wobei die Aktuatorelemente 54a und 54b bzw. 54c und 54d am auslenkbaren Ende des Aktuators 16a bzw. 16b mit einander verbunden sind, so dass eine Auslenkung eines der Aktuatorelemente 54a oder 54b bzw. 54c oder 54d zu einer Auslenkung des Aktuators 16a bzw. 16b führt, wobei die jeweiligen Aktuatorelemente 54a und 54b bzw. 54c und 54d eines Aktuators parallel ansteuerbar sind.

Eine Kombination mehrerer Aktuatorelemente 54a-d ermöglicht eine Verringerung von Querkontraktionseffekten in piezoelektrisch betriebenen Aktuatoren, da für jedes Aktuatorelement ein Verhältnis einer Aktuatorlänge zu einer Aktuatorbreite derart optimiert ist.

Alternative Ausführungsbeispiele zeigen Aktuatorelemente, die ohne einen Abstand zueinander angeordnet sind und ein gemeinsames Substrat umfassen, sowie Aktuatorelemente, die getrennt von einander ansteuerbar sind.

Weitere Ausführungsbeispiele zeigen Aktuatoren mit zumindest zwei Aktuatorelementen, wobei von einander verschiedene Aktuatorelemente von einander verschiedene Aktuationsprinzipien nutzen, indem ein Aktuatorelement eine piezoelektrische Funktionsschicht umfasst und ein anderes Aktuatorelement eine thermische Funktionsschicht umfasst.

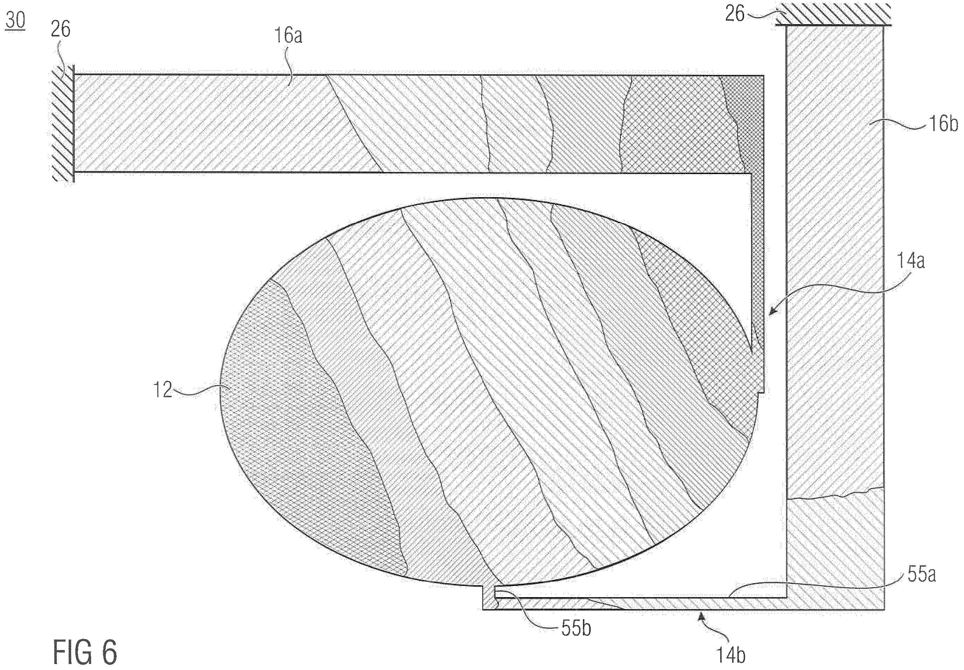

Fig. 6 zeigt eine Vorrichtung 30, gemäß der beanspruchten Erfindung, mit einem optischen Element 12, das über die Federn 14a und 14b an den Aktuatoren 16a und 16b verkippbar angeordnet ist, wobei die Erstreckungsrichtungen der Aktuatoren 16a und 16b senkrecht zu einander angeordnet sind.

Die Feder 14b umfasst zwei jeweils gerade ausgeformte Abschnitte 55a und 55b, wobei der Abschnitt 55a relativ zum Abschnitt 55b lang ausgeformt ist und in etwa 97 % der gesamten Ausdehnung und der Abschnitt 55b in etwa 3 % der gesamten Ausdehnung entlang der Feder umfasst

Eine Kombination mehrerer unterschiedlich langer axialer Abschnitte erlaubt eine effiziente Einleitung von Torsionsmomenten in die Feder,

Alternative Ausführungsbeispiele gemäß der beanspruchten Erfindung, zeigen Federn, welche mehr als zwei und maximal sechs gerade Abschnitte umfassen, wobei die Abschnitte eine individuelle und ein Abschnitt ausgebildet ist, der zumindest 80 % der gesamten axialen Ausdehnung des Federverlaufs umfasst und wobei jeder der kürzeren Abschnitte einen maximalen Anteil von 4 % des axialen Verlaufs der jeweiligen Feder umfasst.

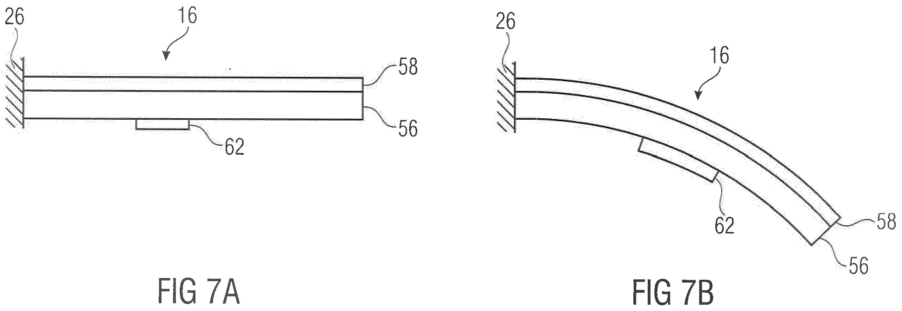

Fig. 7a zeigt eine Seitenansicht eines Aktuators 16 in einem unausgelenkten Zustand. Der Aktuator 16 umfasst ein Substrat 56 und eine thermische Funktionsschicht 58, welche über eine axiale Ausdehnung von der festen Einspannung 26 ausgehend hin zu einem auslenkbaren Ende des Aktuators 16 an dem Substrat 56 angeordnet ist. Die Funktionsschicht 58 ist ausgebildet ist um bei einer Erwärmung eine vom Substrat 56 verschiedene Ausdehnung aufzuweisen, so dass ein der festen Einspannung 26 gegenüberliegendes Ende des Aktuators 16 ausgelenkt wird. An einer der Funktionsschicht 58 abgewandten Seite des Substrates 56 ist ein Dehnungsmessstreifen 62 angeordnet, welcher ausgebildet ist, um eine Auslenkung des Aktuators 16 zu erfassen und die erfasste Auslenkung in Form eines Signals bereitzustellen.

Fig. 7b zeigt den Aktuator 16 in einem ausgelenkten Zustand, in welchem eine Expansion der Funktionsschicht 58 zu einer Stauchung des Dehnungsmessstreifens 62 führt.

In alternativen Ausführungsbeispielen umfasst die Funktionsschicht piezoelektrische Materialien, die ausgebildet sind, um bei Anlegen einer elektrischen Spannung eine Kontraktion oder eine Expansion zu erfahren und den Aktuator aufgrund der Kontraktion oder Ausdehnung auszulenken.

Je nach Betriebszustand der Aktuatoren und mithin je nach erwarteter Materialbelastung können auch andere Messverfahren zur Erfassung des Auslenkungszustandes an den Aktuatoren angeordnet sein, beispielsweise Bragg-Gitter, welche in faseroptischen Sensoren eingebracht sind.

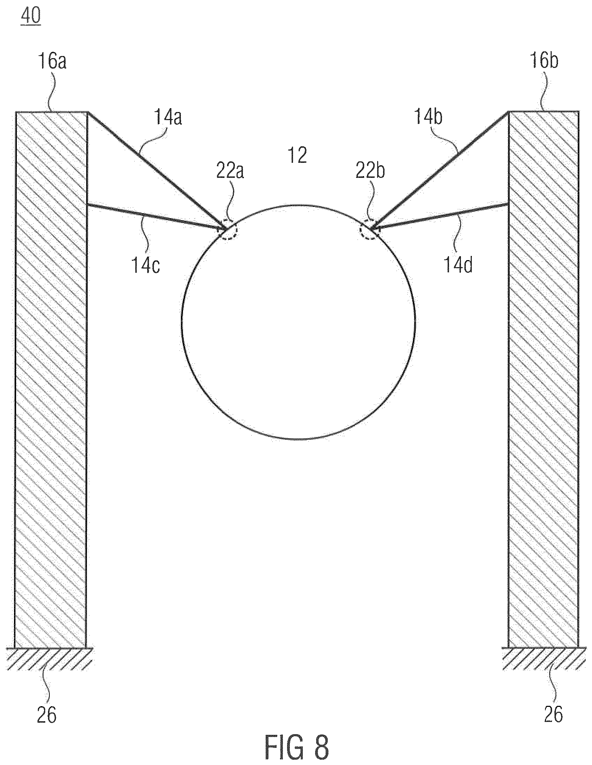

Fig. 8 zeigt eine schematische Aufsicht auf eine Vorrichtung 40 analog Vorrichtung 10 aus Fig. 1, bei der eine zusätzliche Feder 14c zwischen dem Aktuator 16a und dem optischen Element 12 und eine zusätzliche Feder 14d zwischen dem Aktuator 16b und dem optischen Element 12 angeordnet ist, wobei die Federn 14a und 14c sowie 14b und 14d jeweils paarweise an den optikseitigen Anbringungsbereichen 22a und 22b angeordnet sind, so dass die Anzahl der Stützpunkte am optischen Element 12 unverändert ist, wobei die Federn 14a-d jeweils eine gleiche laterale Ausdehnung umfassen.

Eine Anordnung mehrerer Federn erlaubt eine effizientere Übertragung einer Aktuatorauslenkung an das optische Element oder eine zusätzliche Stabilisierung einer Position des optischen Elementes, so dass gewichtsbedingte Auslenkungen des optischen Elementes reduziert sind.

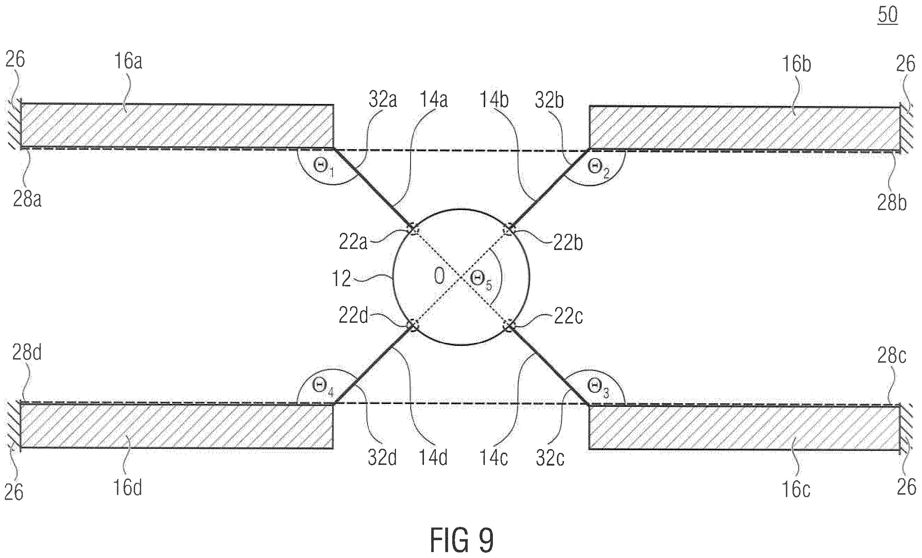

Fig. 9 zeigt eine Aufsicht auf eine Vorrichtung 50 mit vier Aktuatoren 16a-d, an denen über vier Federn 14a-d das optische Element 12 um die beiden Torsionsachsen 18a und 18b verkippbar aufgehängt ist. Die Federn 14a-d sind an vier optikseitigen Anbringungsbereichen 22a-d mit dem optischen Element 12 verbunden. Der Aktuatorverlauf 28a-d eines Aktuators 16a-d bildet mit dem Federverlauf 32a-d einer am jeweiligen Aktuator 16a-d angeordneten Feder 14a-d einen Winkel $\theta_1$, $\theta_2$, $\theta_3$ bzw. $\theta_4$. Die Aktuatoren 16a-d sind derart angeordnet, dass die Verläufe 28a und 28d sowie die Verläufe 28b und 28c parallel zueinander verlaufen und der Verlauf 28a deckungsgleich mit dem Verlauf 28b sowie der Verlauf 28d deckungsgleich mit dem Verlauf 28c angeordnet ist. Die Winkel $\theta_{1\text{-}4}$ definieren die Lage der Torsionsachsen 18a und 18b, wobei sich die beiden Torsionsachsen 18a und 18b mit einem Winkel $\theta_5$ schneiden und der Winkel $0_5$ durch die Gleichung

$$\theta_5 = 360° - (\theta_3 + \theta_4)$$

bestimmt ist, sodass die Richtungen, in welche sich das optische Element 12 auslenkbar ist, geometrisch durch die Anordnung der Federn 14a-d bezüglich der Aktuatoren 16a-d und des optischen Elementes 12 definierbar ist.

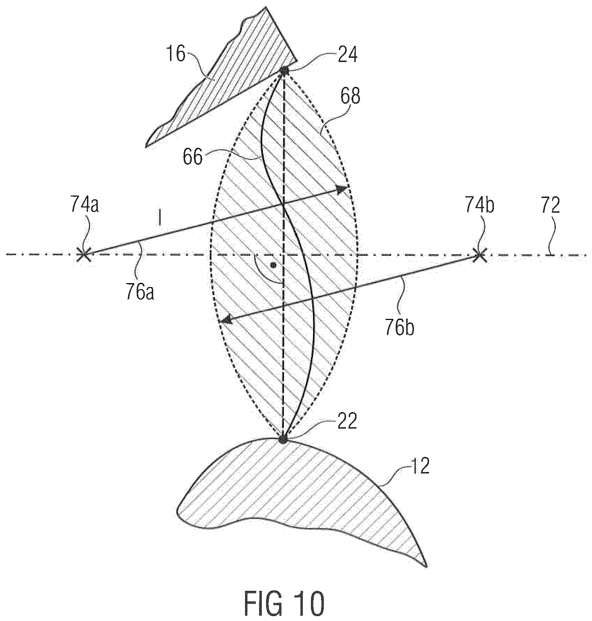

Fig. 10 zeigt eine Aufsicht auf eine Feder 66, die einen gekrümmten Verlauf umfasst. Der gekrümmte Verlauf ist dabei derart ausgebildet, dass die Feder innerhalb eines Federbereichs 68 ausgebildet ist, wobei der Federbereich 68 durch einen Überlappungsbereich zweier Kreisbögen definiert ist. Zwischen dem aktuatorseitigen Anbringungsbereich 24 und dem optikseitigen Anbringungsbereich 22 ist eine Achse 72 angeordnet, welche eine Verbindungslinie zwischen den Anbringungsbereichen 24 und 22 in einem rechten Winkel schneidet. Die Linie 72 umfasst Kreisbogenmittelpunkte 74a und 74b, um die Kreisbögen derart mit einem Radius 76a und 76b angeordnet sind, dass die jeweiligen Kreisbögen die beiden Anbringungsbereiche 24 und 22 schneiden und wobei der Radius 76a bzw. 76b des jeweiligen Kreisbogens größer ist, als 75 % des Abstandes der beiden Anbringungsbereiche 24 und 22 zueinander.

Gekrümmte Federn ermöglichen eine Verringerung von durch Torsionen induziertem Materialstress, so dass eine größere Lebensdauer der Vorrichtung erzielbar ist.

Alternativ zu vorangegangenen Ausführungsbeispielen, die Federn zeigen, die über den Federverlauf hinweg eine konstante laterale Ausdehnung umfassen, zeigen alternative Ausführungsbeispiele Vorrichtungen mit Federn, die eine über den Federverlauf variierende laterale Ausdehnung umfassen, wie es nachfolgend gezeigt ist.

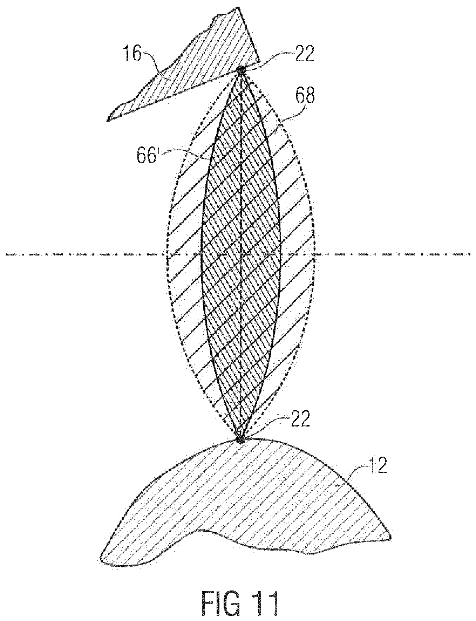

Fig. 11 zeigt eine Aufsicht auf eine Feder 66' mit einer variierenden lateralen Ausdehnung über einen axialen Verlauf vom optikseitigen Anbringungsbereich 22 hin zum aktuatorseitigen Anbringungsbereich 24. Die Feder 66' ist innerhalb des Bereichs 68 ausgebildet, so dass ein gekrümmter Verlauf einer Feder 66 aus Fig. 10 von der Feder 66' umfasst ist.

Eine variierende laterale Ausdehnung erlaubt eine definierte Aufnahme von Verformungsenergie über den axialen Verlauf der Feder hin.

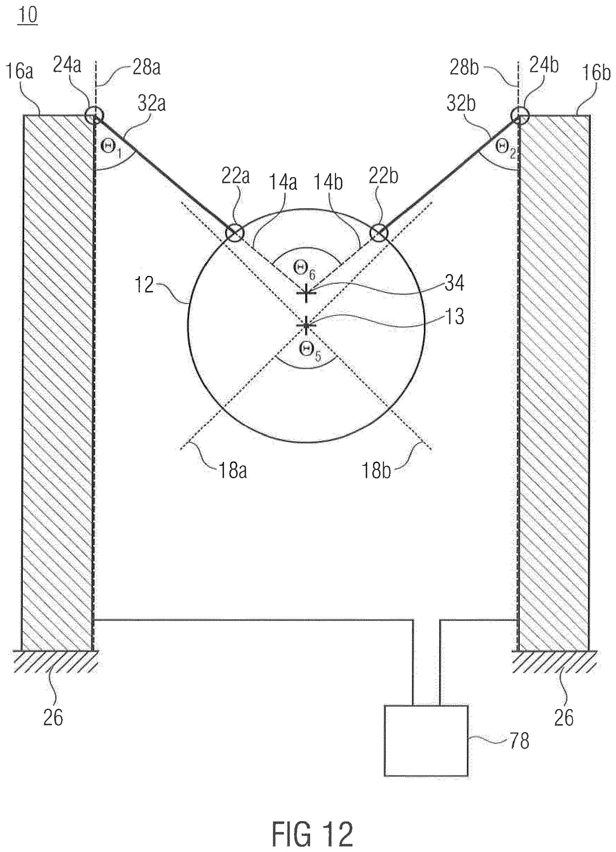

Fig. 12 zeigt Vorrichtung 10 aus Fig. 1, mit einer Steuereinrichtung 78, die ausgebildet ist, um die Aktuatoren 16a und 16b anzusteuern und eine Auslenkung der Aktuatoren 16a und 16b zu bewirken, so dass das optische Element 12 eine Verkippung erfährt.

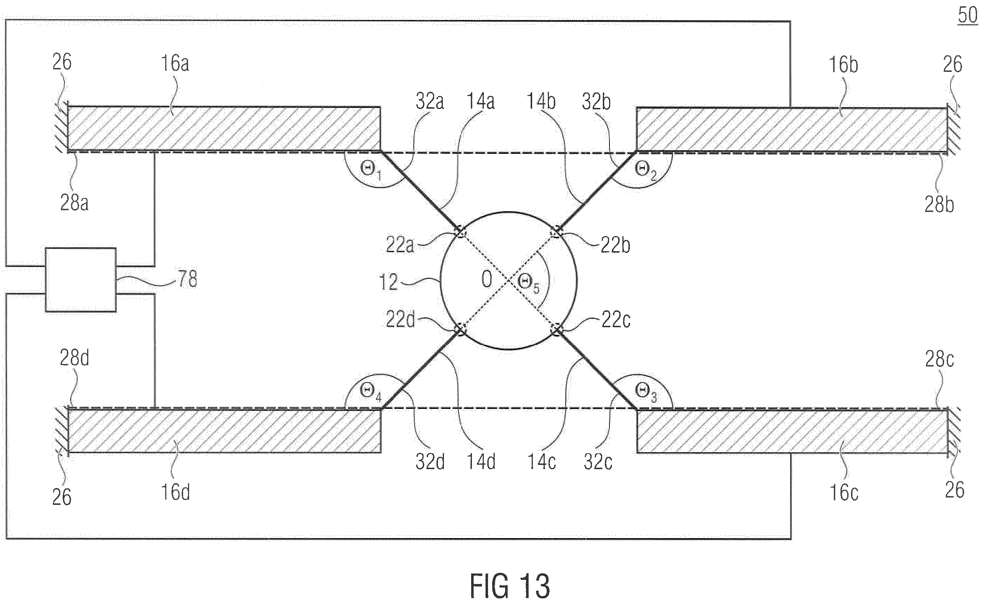

Fig. 13 zeigt Vorrichtung 50 aus Fig. 9, mit einer Steuereinrichtung 78, die ausgebildet ist, um die Aktuatoren 16a-d anzusteuern und eine Auslenkung der Aktuatoren 16a-dzu bewirken, so dass das optische Element 12 eine Verkippung erfährt.

Obwohl in vorangegangen Ausführungsbeispielen das optische Elemente stets rund ausgeformt ist, kann das optische Element eine beliebige Form umfassen, beispielsweise elliptisch oder viereckig.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literatur

[1] Umer Izhar, Boon S. Ooi, Svetlana Tatic-Lucic, Multi-axis micromirror for optical coherence tomography,Procedia Cemistry, Volume 1, Issue 1, September 2009, Seiten 1.147-1.150

**Patentansprüche**

1. Vorrichtung, mit:

    einem ersten Aktuator (16; 16a-d);
    einem zweiten Aktuator (16; 16a-d);
    einem optischen Element (12);
    zumindest einer ersten Feder (14a-d; 66; 66'), die zwischen dem ersten Aktuator (16; 16a-d) und dem optischen Element (12) angeordnet ist;
    zumindest einer zweiten Feder (14a-d; 66; 66'), die zwischen dem zweiten Aktuator (16; 16a-d) und dem optischen Element (12) angeordnet ist;
    wobei das optische Element (12) genau zwei von einander beabstandete optikseitige Befestigungsbereichen (22; 22a-b) umfasst; und
    wobei die zumindest eine erste Feder (14a-d; 66; 66') an dem ersten optikseitigen Befestigungsbereich (22; 22a-d) angeordnet ist, und die zumindest eine zweite Feder (14a-d; 66; 66') an dem zweiten optikseitigen Befestigungsbereich (22; 22a-d) angeordnet ist, so dass eine Aktuierung des ersten oder zweiten Aktuators (16; 16a-d) eine Verkippung des optischen Elementes um zwei Achsen (18a-b) bewirkt;
    wobei die erste Feder (14a-d; 66; 66') an einem ersten aktuatorseitigen Befestigungsbereich (24; 24a-b) an dem ersten Aktuator (16; 16a-d) angeordnet ist, und die zweite Feder (14a-d; 66; 66') an einem zweiten aktuatorseitigen Befestigungsbereich (24; 24a-d) an dem zweiten Aktuator (16; 16a-d) angeordnet ist;
    die erste Feder und die zweite Feder (14a-d; 66; 66') zwischen dem jeweiligen ersten und dem jeweiligen zweiten Ende kleinergleich sechs abschnittsweise gerade Abschnitte (55a-b) umfasst; wobei

        die Abschnitte (55a-b) eine unterschiedliche axiale Ausdehnung entlang des Federverlaufs vom ersten zum zweiten Ende der Feder (14a-d; 66; 66') umfassen, so dass die Feder (14a-d; 66; 66') einen langen und zumindest einen kurzen Abschnitt (55a-b) umfasst;
        der lange Abschnitt (55a-b) zumindest 80 % der gesamten axialen Ausdehnung des Verlaufs der Feder (14a-d; 66; 66') umfasst; und
        jeder kurze Abschnitt (55a-b) einen Anteil der gesamten axialen Ausdehnung ($x_1$) des Verlaufs der Feder (14a-d; 66; 66') umfasst, der kleiner ist als 4 %.

2. Vorrichtung gemäß Anspruch 1, bei der

    das optische Element (12) zwischen dem ersten und dem zweiten Aktuator (16; 16a-d) angeordnet ist und die erste Feder (14a-d; 66; 66') an einem auslenkbaren Ende des ersten Aktuators (16; 16a-d) angeordnet ist und die zweite Feder (14a-d; 66; 66') an einem auslenkbaren Ende des zweiten Aktuators (16; 16a-d) angeordnet ist;

wobei der erste und der zweite Aktuator (16; 16a-d) sich ausgehend von einer Einspannung (26) in eine gleiche Richtung erstrecken oder wobei jeder Aktuator (16) einen Aktuatorverlauf (28) in einer Erstreckungsrichtung von einer Einspannung (26) ausgehend hin zum aktuatorseitigen Anbringungsbereich (24; 24a-b) aufweist und die Erstreckungsrichtungen der Aktuatoren (16; 16a-d) einen rechten Winkel umfassen.

3. Vorrichtung gemäß Anspruch 1 oder 2, bei der die optikseitigen Befestigungsbereiche (22; 22a-d) eine laterale Ausdehnung entlang eines Umfangs einer Hauptseite des optischen Elementes (12) umfassen, die kleiner ist als der Umfang der Hauptseitenebene multipliziert mit dem Faktor 0,1.

4. Vorrichtung gemäß einem der vorangehenden Ansprüche, bei der einer der Aktuatoren (16; 16a-d) ein Piezoelement umfasst, das ausgebildet ist, den Aktuator (16; 16a-d) aus einer Ruhelage auszulenken.

5. Vorrichtung gemäß einem der vorangehenden Ansprüche, bei der einer der Aktuatoren (16; 16a-d) ein thermisches Stellglied (58) umfasst, das ausgebildet ist, den Aktuator (16; 16a-d) aus einer Ruhelage auszulenken.

6. Vorrichtung gemäß einem der vorangehenden Ansprüche, bei der einer der Aktuatoren (16; 16a-d) zumindest ein erstes und ein zweites Aktuatorelement (54a-d) umfasst.

7. Vorrichtung gemäß Anspruch 6, bei der das erste und das zweite Aktuatorelement (54a-d) gemeinsam ansteuerbar sind.

8. Vorrichtung gemäß einem der vorangehenden Ansprüche, bei der eine axiale Ausdehnung entlang der Erstreckungsrichtung eines Aktuators (16; 16a-d) größer ist als die größte Entfernung zweier beliebiger Punkte der Hauptseite des optischen Elementes (12) und kleinergleich dem fünffachen der größten Entfernung zweier beliebiger Punkte der Hauptseite des optischen Elementes (12).

9. Vorrichtung gemäß einem der vorangehenden Ansprüche, bei der ein Abstand zwischen einem ersten Ende und einem zweiten Ende der Feder (14a-d; 66; 66') kleiner ist als die mit dem Faktor 2 multiplizierte größte Entfernung zweier beliebiger Punkte einer Hauptseite des optischen Elementes (12).

10. Vorrichtung gemäß einem der vorangehenden Ansprüche, bei der eine der Federn (14a-d; 66; 66') eine über den axialen Verlauf ($x_1$) konstante laterale Ausdehnung umfasst;

11. Vorrichtung gemäß Anspruch 10, bei der die laterale Ausdehnung ($x_2$) kleiner ist, als die axiale Ausdehnung ($x_1$) multipliziert mit dem Faktor 0,3.

12. Vorrichtung gemäß einem der vorangehenden Ansprüche, bei der an einem optikseitigen Befestigungspunkt (22; 22a-d) zumindest eine weitere Feder (14a-d; 66; 66') angeordnet ist und jede der Federn (14a-d; 66; 66') eine gleiche laterale Ausdehnung ($x_2$) umfasst.

13. Vorrichtung gemäß einem der Ansprüche 1 bis 9 oder 12, bei der die laterale Ausdehnung ($x_2$) der Federn (14a-d; 66; 66') über den axialen Verlauf der variiert; wobei die laterale Ausdehnung ($x_2$) innerhalb eines Bereichs (68) ausgebildet ist, der durch Kreisbögen definiert ist, die das erste und das zweite Ende der Feder (14a-d; 66; 66') schneiden; wobei

jeder Kreisbogens einen Radius (76a-b) umfasst, der größer ist als das 0,75-fache eines Abstandes zwischen dem ersten Ende und dem zweiten Ende der Feder (14a-d; 66; 66'); und wobei
jeder Kreisbogen einen Mittelpunkt (74a-b) umfasst, der entlang einer Linie (72) positioniert ist, die senkrecht zu einer Geraden, die das erste Ende und das zweite Ende der Feder (14a-d; 66; 66') mit einander verbindet, im Raum positioniert ist.

14. Vorrichtung gemäß einem der vorangehenden Ansprüche, bei der an einem Aktuator (16; 16a-d) ein Messelement (62) angeordnet ist, das ausgebildet ist, den Auslenkungszustand des Aktuators (16; 16a-d) zu erfassen.

15. Vorrichtung gemäß einem der vorangehenden Ansprüche mit:

einer Steuereinheit (78), die ausgebildet ist, um die Aktuatoren (16; 16a-d) anzusteuern; wobei die Steuereinheit (78) ferner ausgebildet ist, um eine Verkippung des optischen Elementes in einer von den beiden Achsen (18a-b) verschiedene Richtung zu bewirken.

**Claims**

1. An apparatus, comprising:

a first actuator (16; 16a-d);
a second actuator (16; 16a-d);
an optical element (12);
at least one first spring (14a-d; 66; 66') disposed between the first actuator (16; 16a-d) and the optical element (12);
at least one second spring (14a-d; 66; 66') disposed between the second actuator (16; 16a-d) and the optical element (12);
wherein the optical element (12) includes exactly two spaced-apart optics-side attachment areas (22; 22a-d); and
wherein the at least one first spring (14a-d; 66; 66') is disposed on the first optics-side attachment area (22; 22a-d) and the at least one second spring (14a-d; 66; 66') is disposed on the second optics-side attachment area (22; 22a-d) such that actuation of the first or second actuator (16; 16a-d) causes tilting of the optical element around two axes (18a-b);
wherein the first spring (14a-d; 66; 66') is disposed on a first actuator-side attachment area (24; 24a-b) on the first actuator (16; 16a-d) and the second spring (14a-d; 66; 66') is disposed on a second actuator-side attachment area (24; 24a-b) on the second actuator (16; 16a-d);
the first spring and the second spring (14a-d; 66; 66') include, between the respective first and respective second end, equal to or less than six portions (55a-b) that are straight in sections; wherein

the portions (55a-b) include a different axial expansion along the spring course from the first to the second end of the spring (14a-d; 66; 66') such that the spring (14a-d; 66; 66') includes a long and at least one short portion (55a-b);
the long portion (55a-b) includes at least 80% of the overall axial expansion of the course of the spring (14a-d; 66; 66'); and each short portion (55a-b) includes a proportion of the overall axial expansion ($x1$) of the course of the spring (14a-d; 66; 66') that is less than 4%.

2. The apparatus according to claim 1, wherein

the optical element (12) is disposed between the first and the second actuator (16; 16a-d) and the first spring (14a-d; 66; 66') is disposed on a deflectable end of the first actuator (16; 16a-d) and the second spring (14a-d; 66; 66') is disposed on a deflectable end of the second actuator (16; 16a-d);
wherein the first and second actuators (16; 16a-d) extend in a same direction starting from a fixing (26), or wherein each actuator (16) has an actuator course (28) in an expansion direction starting from the fixing (26) to the actuator-side attachment area (24; 24a-b) and the extension directions of the actuators (16; 16a-d) include a right angle.

3. The apparatus according to claim 1 or 2, wherein the optics-side attachment areas (22; 22a-d) include a lateral expansion along a circumference of a main side of the optical element (12) which is less than the circumference of the main side plane multiplied by the factor 0.1.

4. The apparatus according to one of the previous claims, wherein one of the actuators (16; 16a-d) includes a piezo element that is implemented to deflect the actuator (16; 16a-d) from a resting position.

5. The apparatus according to one of the previous claims, wherein one of the actuators (16; 16a-d) includes a thermal controlling element (58) that is implemented to deflect the actuator (16; 16a-d) from a resting position.

6. The apparatus according to one of the previous claims, wherein one of the actuators (16; 16a-d) includes at least a first and a second actuator element (54a-d).

7. The apparatus according to claim 6, wherein the first and the second actuator element (54a-d) can be controlled together.

8. The apparatus according to one of the previous claims, wherein an axial expansion along the extension direction of an actuator (16; 16a-d) is greater than the greatest distance of any two points of the main side of the optical element (12) and equal to or less than five times the greatest distance of any two points of the main side of the optical element (12).

9. The apparatus according to one of the previous claims, wherein a distance between a first end and a second end of the spring (14a-d; 66; 66') is less than the greatest distance of any two points of a main side of the optical element (12) multiplied by the factor 2.

10. The apparatus according to one of the previous claims, wherein one of the springs (14a-d; 66; 66') comprises a lateral expansion that is constant across the axial course ($x_1$).

11. The apparatus according to claim 10, wherein the lateral expansion ($x_2$) is less than the axial expansion ($x_1$) multiplied by the factor 0.3.

**12.** The apparatus according to one of the previous claims, wherein at least one further spring (14a-d; 66; 66') is disposed on an optics-side attachment point (22; 22a-d), and each of the springs (14a-d; 66; 66') comprises a same lateral expansion ($x_1$).

**13.** The apparatus to one of claims 1 to 9 or 12, wherein the lateral expansion ($x_2$) of the springs (14a-d; 66; 66') varies across the axial course; wherein the lateral expansion ($x_2$) is implemented within an area (68) defined by circular arcs which intersect the first and the second end of the spring (14a-d; 66; 66'); wherein

each circular arc includes a radius (76a-b) that is greater than 0.75 times of a distance between the first end and the second end of the spring (14a-d; 66; 66'); and wherein each circular arc includes a center (74a-b) positioned along a line (72) that is positioned in space to be perpendicular to a straight line connecting the first end and the second end of the spring (14a-d; 66; 66').

**14.** The apparatus according to one of the previous claims, wherein a measurement element (62) that is implemented to detect the deflection state of the actuators (16; 16a-d) is disposed on an actuator (16; 16a-d).

**15.** The apparatus according to one of the previous claims, comprising:

a control unit (78) implemented to control the actuators (16; 16a-d); wherein the control unit (78) is further implemented to effect tilting of the optical element in a direction differing from the two axes (18a-b).

**Revendications**

**1.** Dispositif, avec :

un premier actionneur (16 ; 16a-d) ;
un second actionneur (16 ; 16a-d) ;
un élément optique (12) ;
au moins un premier ressort (14a-d ; 66 ; 66') qui est disposé entre le premier actionneur (16 ; 16a-d) et l'élément optique (12) ;
au moins un second ressort (14a-d ; 66 ; 66') qui est disposé entre le second actionneur (16 ; 16a-d) et l'élément optique (12) ;
dans lequel l'élément optique (12) comprend précisément deux régions de fixation côté optique (22 ; 22a-b) espacées l'une de l'autre ; et dans lequel l'au moins un premier ressort (14a-d ; 66 ; 66') est disposé sur la première région de fixation côté optique (22 ; 22a-d) et l'au moins un second ressort (14a-d ; 66 ; 66') est disposé sur la seconde région de fixation côté optique (22 ; 22a-d) de telle sorte qu'un actionnement du premier ou du second actionneur (16 ; 16a-d) provoque un basculement de l'élément optique autour de deux axes (18a-b) ;
dans lequel le premier ressort (14a-d ; 66 ; 66') est disposé sur une première région de fixation côté actionneur (24 ; 24a-b) sur le premier actionneur (16 ; 16a-d) et le second ressort (14a-d ; 66 ; 66') est disposé sur une seconde région de fixation côté actionneur (24 ; 24a-d) sur le second actionneur (16 ; 16a-d) ;
le premier et le second ressort (14a-d ; 66 ; 66') comprenant entre la première extrémité respective et la seconde extrémité respective une quantité inférieure ou égale à six sections droites (55a-b) par section ;
dans lequel

les sections (55a-b) comprennent une étendue axiale différente le long du trajet du ressort de la première à la seconde extrémité du ressort (14a-d ; 66 ; 66') de telle sorte que le ressort (14a-d ; 66 ; 66') comprend une section longue et au moins une section courte (55a-b) ;
la section longue (55a-b) comprend au moins 80 % de l'étendue axiale totale du trajet du ressort (14a-d ; 66 ; 66') ; et chaque section courte (55a-b) comprend une partie de l'étendue axiale totale ($x_1$) du trajet du ressort (14a-d ; 66 ; 66') qui est inférieure à 4 %.

**2.** Dispositif selon la revendication 1, dans lequel

l'élément optique (12) est disposé entre le premier et le second actionneur (16 ; 16a-d) et le premier ressort (14a-d ; 66 ; 66') est disposé sur une extrémité déviable du premier actionneur (16 ; 16a-d) et le second ressort (14a-d ; 66 ; 66') est disposé sur une extrémité déviable du second actionneur (16 ; 16a-d) ;
dans lequel le premier et le second actionneur (16 ; 16a-d) s'étendent dans une même direction à partir d'un moyen de serrage (26) ou dans lequel chaque actionneur (16) présente un trajet d'actionneur (28) dans une direction d'extension à partir d'un moyen de serrage (26) jusqu'à une région d'application côté actionneur (24 ; 24a-b) et les directions d'extension des actionneurs (16 ; 16a-d) comprennent un angle droit.

**3.** Dispositif selon la revendication 1 ou 2, dans lequel les régions de fixation côté optique (22 ; 22a-d) comprennent une étendue latérale le long d'une circonférence d'un côté principal de l'élément optique (12) qui est inférieure à la circonférence du plan côté principal multipliée par le facteur 0,1.

4. Dispositif selon une des revendications précédentes, dans lequel un des actionneurs (16 ; 16a-d) comprend un élément piézoélectrique qui est conçu pour dévier l'actionneur (16 ; 16a-d) à partir d'une position de repos.

5. Dispositif selon une des revendications précédentes, dans lequel un des actionneurs (16 ; 16a-d) comprend un organe de commande thermique (58) qui est conçu pour dévier l'actionneur (16 ; 16a-d) à partir d'une position de repos.

6. Dispositif selon une des revendications précédentes, dans lequel un des actionneurs (16 ; 16a-d) comprend au moins un premier et un second élément d'actionneur (54a-d).

7. Dispositif selon la revendication 6, dans lequel le premier et le second élément d'actionneur (54a-d) peuvent être commandés conjointement.

8. Dispositif selon une des revendications précédentes, dans lequel une étendue axiale le long de la direction d'extension d'un actionneur (16 ; 16a-d) est supérieure au plus grand éloignement de deux points quelconques du côté principal de l'élément optique (12) et inférieure ou égale à cinq fois le plus grand éloignement de deux points quelconques du côté principal de l'élément optique (12).

9. Dispositif selon une des revendications précédentes, dans lequel une distance entre une première extrémité et une seconde extrémité des ressorts (14a-d ; 66 ; 66') est inférieure au plus grand éloignement de deux points quelconques d'un côté principal de l'élément optique (12) multiplié par un facteur de 2.

10. Dispositif selon une des revendications précédentes, dans lequel un des ressorts (14a-d ; 66 ; 66') comprend une étendue latérale constante sur le trajet axial ($x_1$).

11. Dispositif selon la revendication 10, dans lequel l'étendue latérale ($x_2$) est inférieure à l'étendue axiale ($x_1$) multipliée par le facteur de 0,3.

12. Dispositif selon une des revendications précédentes, dans lequel sur un point de fixation côté optique (22 ; 22a-d) est disposé au moins un autre ressort (14a-d ; 66 ; 66') et chacun des ressorts (14a-d ; 66 ; 66') comprend la même étendue latérale ($x_2$).

13. Dispositif selon une des revendications 1 à 9 ou 12, dans lequel l'étendue latérale ($x_2$) des ressorts (14a-d ; 66 ; 66') varie sur le trajet axial ; dans lequel l'étendue latérale ($x_2$) est conçue à l'intérieur d'une région (68) qui est définie par des arcs de cercle qui coupent la première et la seconde extrémité du ressort (14a-d ; 66 ; 66') ; dans lequel

chaque arc de cercle comprend un rayon (76a-b) qui est supérieur à 0,75 fois la distance entre la première extrémité et la seconde extrémité du ressort (14ad ; 66 ; 66') ; et dans lequel chaque arc de cercle comprend un point central (74a-b) qui est positionné le long d'une ligne (72) positionnée dans l'espace perpendiculairement à une ligne droite qui relie la première extrémité et la seconde extrémité des ressorts (14a-d ; 66 ; 66') l'une à l'autre.

14. Dispositif selon une des revendications précédentes, dans lequel sur un actionneur (16 ; 16a-d) est disposé un élément de mesure (62) qui est conçu pour détecter l'état de déviation de l'actionneur (16 ; 16a-d).

15. Dispositif selon une des revendications précédentes avec :

une unité de commande (78) qui est conçue pour commander les actionneurs (16 ; 16a-d) ; dans lequel l'unité de commande (78) est en outre conçue pour provoquer un basculement de l'élément optique dans une direction différente des deux axes (18a-b).

FIG 1

FIG 2A

26b
52b
24b
14'a
26c
24a
14'd
12'
52a
26a
52c
24c
14'b
18b
18a
14'c
52d
24d
26c

**FIG 2B**

16d  14'c  12'  14'd  16a  18a  14'b  16c  18b  14'a  16b

FIG 3

FIG 4

20

24a 24b

14a 14b

16a 16b

12

54a 54d

54b 54c

26 26

FIG 5

FIG 6

EP 2 808 720 B1

FIG 7A

FIG 7B

EP 2 808 720 B1

FIG 8

FIG 9

EP 2 808 720 B1

FIG 10

EP 2 808 720 B1

FIG 11

22

FIG 12

FIG 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080165402 A1

**In der Beschreibung aufgeführte Nicht-Patentliteratur**

- **UMER IZHAR** ; **BOON S. OOI** ; **SVETLANA TATIC-LUCIC**. Multi-axis micromirror for optical coherence tomography. *Procedia Cemistry*, September 2009, vol. 1 (1), 1.147-1.150